## Europäisches Patentamt
## European Patent Office
## Office européen des brevets

(19)

(11) Numéro de publication: **0 179 724**
**B1**

(12) # FASCICULE DE BREVET EUROPÉEN

(45) Date de publication du fascicule du brevet:
**23.11.88**

(51) Int. Cl.⁴: **B 29 C 45/40**

(21) Numéro de dépôt: **85420170.4**

(22) Date de dépôt: **25.09.85**

(54) **Attelage d'éjection pour presse à injecter.**

(30) Priorité: **26.09.84 FR 8415335**

(43) Date de publication de la demande:
**30.04.86 Bulletin 86/18**

(45) Mention de la délivrance du brevet:
**23.11.88 Bulletin 88/47**

(84) Etats contractants désignés:
**AT BE CH DE FR GB IT LI LU NL SE**

(56) Documents cité:
**DE-A-2 357 962**
**DE-A-2 538 386**
**FR-A-2 497 721**
**FR-A-2 536 697**

(73) Titulaire: **Vallet, Marc, Route de Mussel Ochiaz,
F-01200 Bellegarde (FR)**

(72) Inventeur: **Vallet, Marc, Route de Mussel Ochiaz,
F-01200 Bellegarde (FR)**
Inventeur: **Rinaldi, Claude, 12, rue Jean Moulin
Arold, F-01200 Bellegarde (FR)**

(74) Mandataire: **Bratel, Gérard, Cabinet GERMAIN &
MAUREAU Le Britannia - Tour C 20, boulevard
E. Déruelle, F-69003 Lyon (FR)**

EP 0 179 724 B1

LIBER, STOCKHOLM 1988

## Description

La présente invention concerne un attelage d'éjection pour presse à injecter, c'est-à-dire un dispositif de liaison séparable entre, d'une part, l'ensemble d'éjection appartenant à un moule monté sur la presse et, d'autre part, des moyens de commande tel que vérin existant de façon habituelle sur la presse à injecter.

Plus particulièrement, l'invention se rapporte à un attelage d'éjection comprenant un système d'accouplement entre un ensemble d'éjection appartenant à un moule, d'une part, et des moyens de commande existants de la presse, d'autre part, avec d'un côté une pince à mâchoires pivotantes entourées d'un fourreau et de l'autre côté une tête élargie apte à être maintenue par les mâchoires de la pince lorsque celles-ci sont resserrées. Un dispositif de ce genre est déjà connu par le document DE-A-2 357 962.

Dans ce dispositif d'accouplement connu, la partie la plus importante, c'est-à-dire la pince à mâchoires pivotantes, est située du côté du moule et fixée à demeure sur ce moule. Ainsi, l'équipement complet d'un atelier de presses à injecter reste très coûteux, car si les parties se fixant sur les presses restent uniques, par contre les parties chères spéciales aux moules doivent être multipliées en autant d'exemplaires qu'il existe de moules différents, généralement nombreux.

De plus, le dispositif connu comporte un mécanisme à ressorts, effectuant un accouplement et un désaccouplement à chaque cycle d'ouverture-fermeture du moule, d'où nécessité de réglages précis sur la machine, ainsi qu'une usure rapide et des détériorations fréquentes conduisant à des fonctionnement défectueux.

La présente invention vise à remédier à l'ensemble de ces inconvenients, en fournissant un dispositif simple, résistant, fiable et d'un prix moins élevé que les dispositifs actuels.

A cet effet, l'invention a pour objet un attelage d'éjection pour presse à injecter, du genre précisé en introduction, dans lequel la tête élargie est située à l'extrémité d'une queue d'éjection fixée sur l'ensemble d'éjection appartenant au moule, les mâchoires mobiles sont montées basculantes autour d'un support commun solidaire d'un embout adaptable sur les moyens de commande existants de la presse, le fourreau entourant les mâchoires est monté coulissant de telle sorte qu'en position avancée, ce fourreau coulissant maintient les mâchoires resserrées de manière à retenir la tête terminant la queue d'éjection et qu'en position reculée, ce fourreau coulissant maintient les mâchoires écartées de manière à libérer la tête terminant la queue d'éjection, et des moyens de verrouillage sont prévus pour bloquer temporairement le fourreau en position avancée.

Cet attelage d'éjection ne comporte aucun ressort ou autre organe fragile, ce qui le rend particulièrement résistant. Sa partie principale formant pince, qui se fixe sur la presse en s'adaptant sur un vérin ou un plateau, constitue un investissement unique. Son autre partie dite "queue d'éjection", propre à chaque moule, reste très simple donc d'un prix modéré, de sorte que, même en multipliant le coût de cette partie par le nombre total de moules, l'équipement total destiné à un atelier de presses conserve un coût global réduit au quart environ de l'investissement actuellement nécessaire.

Le serrage des mâchoires de la pince, lorsque celles-ci sont bloquées par les moyens de verrouillage, rend la queue d'éjection du moule continuellement solidaire de la partie "pince", et permet de commander systématiquement le retrait de l'ensemble d'éjection, durant tout le temps d'utilisation d'un moule donné, sans aucune séparation des parties en cours de fonctionnement.

Selon une forme de réalisation préférée de l'invention, les mâchoires de la pince sont montées basculantes autour d'une tige prolongeant un embout de vérin, tige qui présente une collerette proche de l'embout et qui se termine par une tête élargie, tandis que la face intérieure de chaque mâchoire présente une gorge dans laquelle est engagée une partie de la collerette, ainsi que, près de son extrémité avant, un cran apte à retenir la tête de la queue d'éjection et la tête liée à l'embout, lorsque les mâchoires sont resserrées.

Pour commander la fermeture de la pince, chaque mâchoire de celle-ci présente avantageusement, sur sa face extérieure, une rampe inclinée ainsi qu'une butée, située près de son extrémité avant, prevues l'une et l'autre pour coopérer avec le fourreau coulissant. Pour commander l'ouverture de la pince, le fourreau coulissant peut encore présenter lui-même, intérieurement, une rampe inclinée prévue pour coopérer avec les mâchoires de la pince. La liaison entre les moyens de commande situés sur la presse et l'ensemble d'éjection appartenant au moule, ou inversement leur séparation, peut ainsi être réalisée en un temps très court, juste nécessaire au déplacement par coulissement du fourreau et à son blocage ou déblocage par action sur les moyens de verrouillage.

Ces moyens de verrouillage sont constitués, dans une réalisation particulière, par une butée montée de manière amovible sur l'embout de vérin, cette butée coopérant avec l'extrémité arrière du fourreau coulissant, de manière à empêcher tout recul de ce dernier, lorsqu'elle est mise en place. L'embout de vérin porte de préférence une seconde butée, apte à arrêter le fourreau dans sa position reculée, afin d'éviter toute séparation des différentes pièces de la pince.

Dans une variante, les moyens de verrouillage comprennent une butée unique, portée par l'embout de vérin et apte à être introduite soit dans une gorge en arc de cercle ménagée à l'extrémité arrière du fourreau coulissant, soit

dans une fente longitudinale de ce fourreau partant de son extrémité arrière et s'étendant sur une fraction de sa longueur. Le fourreau décrit dans ce cas un mouvement combiné de coulissement, commandant la fermeture et l'ouverture de la pince, et de rotation, commandant le verrouillage et le déverrouillage.

Selon une autre variante, les moyens de verrouillage comprennent d'une part une rainure en "L", avec une partie orientée longitudinalement et une partie orientée transversalement qui est ménagée dans l'embout de vérin, et d'autre part un téton porté par le fourreau coulissant, faisant saillie à l'intérieur de ce fourreau et engagé dans la rainure en "L". La rainure en "L" détermine, ici aussi, un mouvement combiné de coulissement et de rotation du fourreau, le téton étant engagé dans la partie transversale de la rainure pour assurer le verrouillage en position de fermeture de la pince. Avantageusement, sont encore prévus des moyens d'indexage axial et en rotation du fourreau coulissant; ces moyens d'indexage peuvent comprendre au moins un poussoir a ressort porté par l'embout de vérin, coopérant avec au moins une rainure en "Y" longitudinale, et au moins une rainure en "Y" annulaire, ménagées sur la paroi interne du fourreau coulissant.

Les formes d'exécution définies précédemment concernent essentiellement des attelages commandés manuellement. On peut aussi obtenir une commande à distance hydraulique, en prévoyant une chambre annulaire ménagée entre l'embout de vérin et le fourreau coulissant, ainsi que des moyens d'amenée de fluide hydraulique à la chambre annulaire, pour provoquer le recul du fourreau coulissant, ce dernier étant rappelé vers sa position avancée de verrouillage par des moyens à ressort. Ces moyens, tels qu'un empilage de rondelles-ressorts, agissant dans le sens de la fermeture, assurent eux-mêmes le verrouillage de l'attelage. Les presses à injecter étant toujours équipées d'un groupe hydraulique, l'adjonction de cette commande à distance, fonctionnant comme un verin à simple effet, est relativement facile et économique; elle a aussi pour avantage de résoudre les problèmes d'accès qui peuvent se poser dans le cas des attelages nécessitant des interventions manuelles.

Selon une autre caractéristique de l'invention, permettant l'adaptation du même attelage d'éjection à une presse utilisée avec un faux plateau, cet attelage est complété par une rallonge comportant un embout s'adaptant sur la tête de la queue d'éjection, et une tige se terminant par une tête analogue à la précédente et apte à être retenue dans la pince formée par les mâchoires mobiles. L'embout de la rallonge possède, de préférence, un logement s'ouvrant vers l'avant et sur le côté, pour recevoir la tête de la queue d'éjection, et il est muni d'une vis-butée empêchant tout déplacement axial de ladite tête.

De toute façon, l'invention sera mieux comprise à l'aide de la description qui suit, en référence au dessin schématique annexe représentant, à titre d'exemples non limitatifs, quelques formes d'exécution de cet attelage d'éjection:

Figure 1 est une vue en coupe longitudinale d'un attelage d'éjection pour presse à injecter conforme à la présente invention, en position verrouillée;

Figure 2 est une vue en coupe longitudinale similaire à figure 1, mais montrant l'attelage d'éjection en position déverrouillée;

Figure 3 est une vue en coupe transversale de cet attelage d'éjection, en position verrouillée, suivant 3 - 3 de figure 1;

Figure 4 est une vue similaire à figure 3, mais correspondant à la position déverrouillée;

Figure 5 est une vue partielle en coupe longitudinale de l'attelage d'éjection précédent, complété par une rallonge pour son adaptation à une presse utilisée avec un faux plateau;

Figure 6 est une vue en coupe transversale de ladite rallonge, suivant 6 - 6 de figure 5;

Figure 7 est une vue en coupe longitudinale d'une variante de l'attelage d'éjection objet de l'invention, montrée en position verrouillée;

Figure 8 est une vue en coupe transversale de cette variante, suivant 8 - 8 de figure 7;

Figure 9 est une vue en coupe longitudinale d'une autre variante de l'attelage d'éjection objet de l'invention, montrée en position verrouillée;

Figure 10 est une vue en coupe longitudinale similaire à figure 9, mais montrant l'attelage d'éjection en position déverrouillee;

Figure 11 montre l'embout seul de la variante selon les figures 9 et 10;

Figure 12 est une vue en coupe transversale du fourreau coulissant de cette dernière variante;

Figure 13 est une vue en coupe longitudinale d'un attelage d'éjection conforme à l'invention avec commande à distance hydraulique, montré en position verrouillée;

Figure 14 est une vue en coupe longitudinale similaire à figure 13, mais montrant l'attelage d'éjection en position déverrouillée.

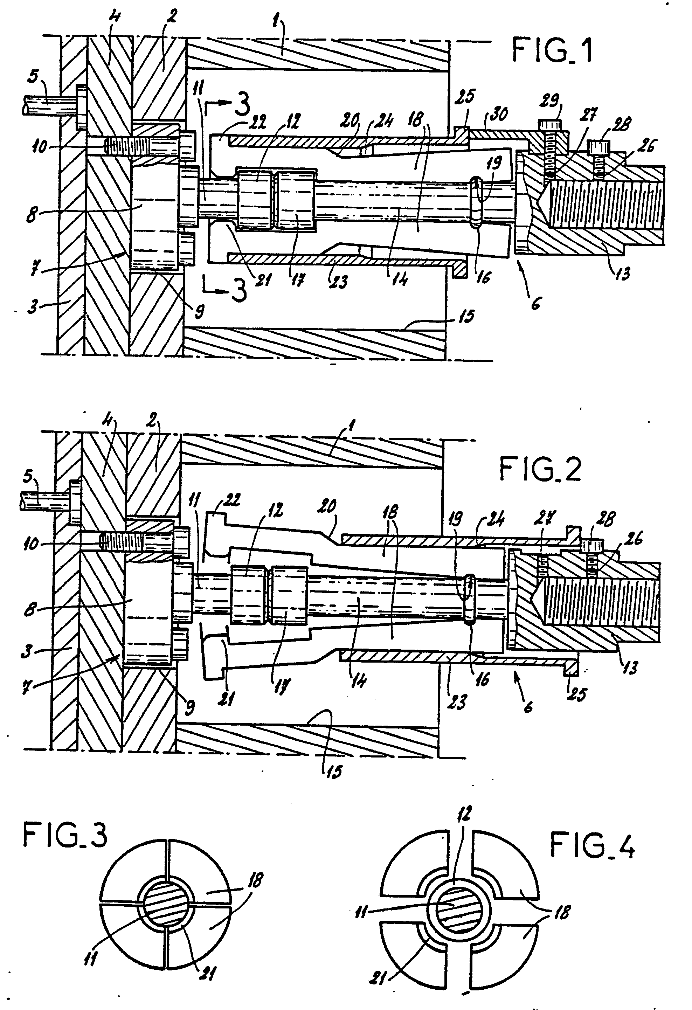

Les figures 1 et 2 montrent partiellement un plateau de presse à injecter (1), sur lequel est montée une semelle de moule (2). Un ensemble d'éjection, également montré partiellement, comprend une plaque d'éjection (3) et une contre-plaque (4), entre lesquelles sont retenues les têtes des éjecteurs (5).

L'attelage d'éjection (6), faisant l'objet de l'invention, comprend du côté du moule une qùeue d'éjection (7), avec une embase (8) logée dans un évidement (9) de la semelle (2) et fixée au moyen de vis (10) à la contre-plaque (4) de l'ensemble d'éjection du moule, et avec une courte tige (11) se terminant par une tête élargie (12).

Du côté de la presse, l'attelage d'éjection (6) comprend un embout de vérin (13), se fixant par vissage à un vérin existant sur la presse, non représenté, et se prolongeant par une tige (14) introduite dans un évidement (15) du plateau (1). La tige (14) présente une collerette (16) proche de l'embout (13), et elle se termine par une tête élargie (17).

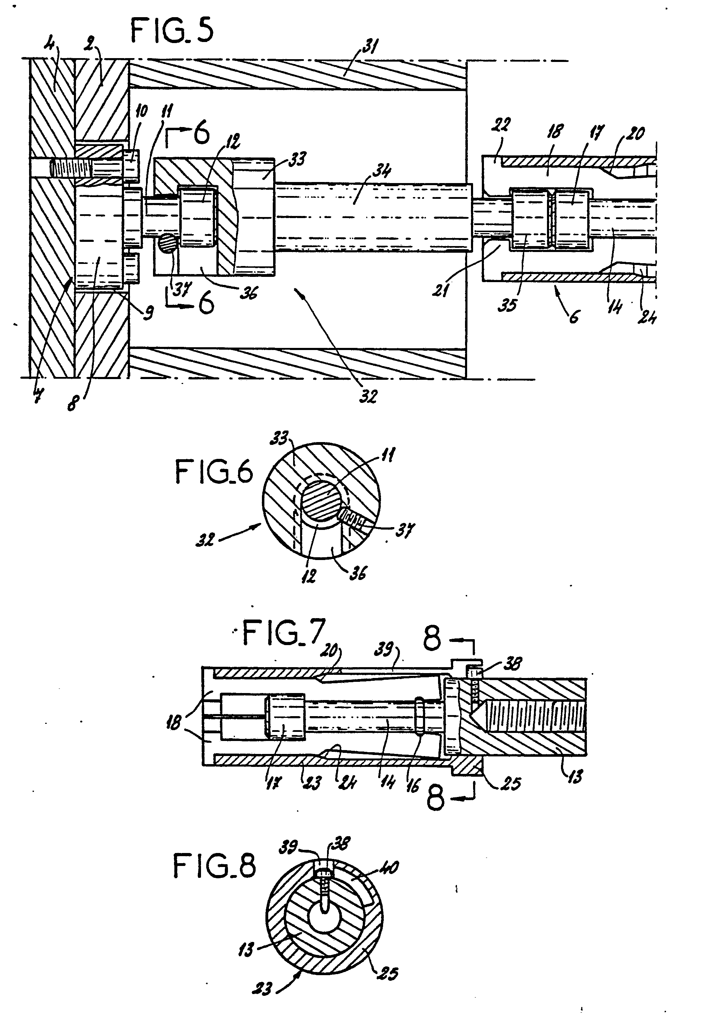

Une pince est formées autour de la tige (14), par quatre mâchoires allongées (18) occupant chacune un secteur de 90° - voir aussi figures 3 et 4. Chaque mâchoire (18) présente, sur sa face intérieure, une gorge (19) dans laquelle est engagée une partie de la collerette (16), tandis qu'elle présente une rampe inclinée (20) sur sa face extérieure. A son extrémité avant, chaque mâchoire (18) possède un épanouissement formant du côté intérieur un cran (21) et du côté extérieur une butée (22).

Un fourreau coulissant (23) est monté autour des mâchoires (18). Le fourreau (23) présente intérieurement une rampe inclinée (24), et extérieurement, à son extrémité arrière, une collerette (25).

L'embout de vérin (13) comporte deux taraudages (26, 27) de direction radiale. Le premier taraudage (26), situé le plus en arrière, reçoit une vis-butée (28). Le second taraudage (27) permet la fixation, au moyen d'une vis (29), d'une butée arrière amovible (30).

En position verrouillée (figures 1 et 2) la butée (30) est en place et elle s'applique contre la collerette (25) du fourreau (23), alors repoussé contre les butées (22) des différentes mâchoires (18). Dans cette position, le fourreau (23) maintient les mâchoires (18) resserrées autour de la tige (14). Ainsi, les mâchoires (18) emprisonnent la tête (17) de la tige (14) ainsi que la tête (12) de la tige (11), les crans (21) empêchant toute sortie de la tête (12). L'attelage (6) avec sa pince fermée et verrouillée relie alors de manière permanente le vérin recevant l'embout (13) à l'ensemble d'éjection (3, 4, 5) du moule (2), et il permet la commande des mouvements de cet ensemble d'éjection durant toute la durée d'utilisation de la presse avec un moule donné.

Lors d'un changement de moule, la butée arrière (30) est démontée et le fourreau (23) est reculé jusqu'à ce qu'il soit arrêté par la vis-butée (28), ce qui place l'attelage d'éjection (6) en position déverrouillée (figures 3 et 4). Au cours du recul du fourreau (23), les parties avant des mâchoires (18) sont d'abord dégagées, puis la rampe inclinée (24) du fourreau (23) provoque le basculement des mâchoires (18), en les faisant pivoter autour des articulations formées par la collerette (16) et les gorges (19). Finalement, les extrémités avant des mâchoires (18) sont écartées de l'axe de l'attelage et la tête (12) se trouve libérée, ce qui permet de séparer le moule équipé de sa queue d'éjection (7) et de monter à sa place un autre moule, équipé de la même manière.

L'attelage d'éjection (6) peut alors être de nouveau verrouillé, en déplaçant le fourreau (23) vers l'avant de sorte que, par action sur les rampes inclinées (20) des mâchoires (18), la pince soit refermée sur les deux têtes (12, 17). Enfin, la remise en place de la butée arrière (30) assure le verrouillage.

Comme le montre la figure 5, dans le cas d'utilisation d'un faux plateau (31), le même attelage d'éjection (6) peut toujours être mis en oeuvre, simplement complété par une rallonge (32). Celle-ci comporte un embout (33) s'adaptant sur la queue d'éjection (7) liée à l'ensemble d'éjection comme précédemment, et une tige (34) se terminant par une tête (35), laquelle est introduite et retenue dans la partie "pince", exactement de la même manière que la tête (l2) de la queue d'éjection (7) dans le cas precédent.

En se référant aussi à la figure 6, on notera que l'embase (33) de la rallonge (32) possède un logement (36) s'ouvrant vers l'avant et sur le côté, pour permettre l'introduction et la retenue de la tige (11) et de la tête (12) de la queue d'éjection (7). L'embase (33) comporte encore un taraudage radial recevant une vis-butée (37) qui, lorsqu'elle est enfoncée, empêche tout déplacement axial de la tête (12).

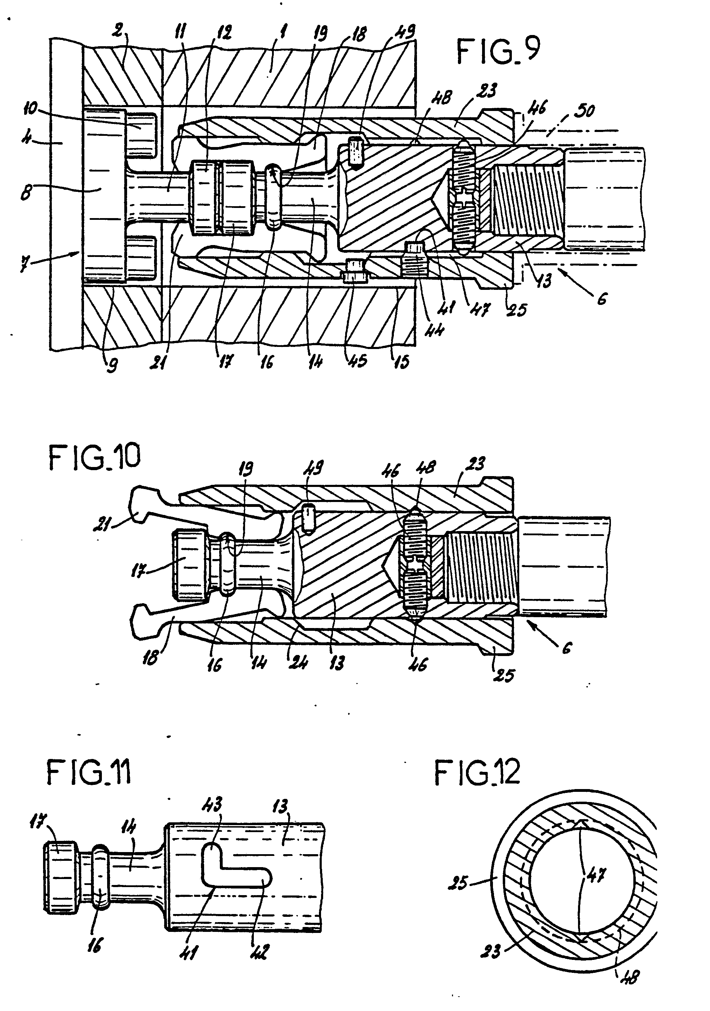

Les figures 7 et 8 représentent une variante, dans laquelle la butée arrière amovible est supprimée, l'embout de vérin (13) portant une seule vis-butée (38). Le fourreau (23) présente sur une fraction de sa longueur une fente longitudinale (39) partant de son extrémité arrière, ou se trouve la collerette (25) ici pourvue d'un moletage. Une gorge en arc de cercle (40) est encore ménagée à cette extrémité arrière du fourreau (23), la gorge (40) débouchant dans la fente (39).

Ainsi, la position verrouillée est obtenue en avançant le fourreau (23) et en le tournant, relativement à l'embout (13) de telle sorte que la vis-butée (38) soit engagée dans la gorge (40). La position déverrouillée s'obtient en tournant le fourreau (23) de manière à extraire la vis-butée (38) de la gorge (40), ce qui permet de reculer le fourreau (23), la tête de la vis-butée (38) s'engageant dans la fente (39).

Les figures 9 à 12 sont relatives à une autre variante, dans laquelle les dimensions longitudinales des mâchoires (18), ainsi que la course du fourreau coulissant (23), sont réduites, sans que le principe de fonctionnement soit modifié. Cette variante se distingue surtout des formes de réalisation précédentes par la structure des moyens de verrouillage:

Comme le montre la figure 11, l'embout (13) présente sur sa face cylindrique une rainure en "L" (41), avec une partie (42) orientée longitudinalement et une autre partie (43) orientée transversalement. Le fourreau (23) est pourvu d'un téton de verrouillage (44), faisant saillie intérieurement et engagé dans la rainure en "L" (41) - voir figure 9. Un graisseur démontable (45) est également porté par le fourreau (23).

Par ailleurs, l'embout (13) renferme deux poussoirs à ressorts (46), qui servent de moyens d'indexage en combinaison avec deux rainures en "Y" longitudinales (47) diamétralement

**0 179 724**

opposées, et une rainure en "Y" annulaire (48), ménagées sur la paroi interne du fourreau (23) - voir notamment la figure 12. L'embout (13) porte encore un doigt (49) servant de butée de fin de course pour le fourreau coulissant (23).

En position verrouillée (figure 9), le fourreau (23) est repoussé vers l'avant, et recouvre entièrement les mâchoires (18) pour les maintenir resserrées autour des deux têtes (14, 17) réunies. Cette position est maintenue par l'engagement du téton de verrouillage (44) dans la partie transversale (43) de la rainure en "L" (41), empêchant alors tout mouvement axial du fourreau (23). Un indexage en rotation du fourreau (23), donnant toute la sécurité souhaitable, est donné dans cette position verrouillée par la coopération des deux poussoirs à ressorts (46) avec les deux rainures longitudinales (47).

Pour déverrouiller l'attelage, le fourreau (23) est d'abord tourne par sa collerette (25) pourvue d'un moletage, puis ce fourreau (23) est reculé, son mouvement de coulissement axial étant guidé par le glissement du téton (44) dans la partie longitudinale (42) de la rainure en "L" (41). Lorsque le fourreau (23) parvient dans sa position la plus reculée, dégageant et libérant les mâchoires (18), un indexage axial est obtenu par la coopération des deux poussoirs à ressorts (46) avec la rainure annulaire (48) - voir la figure 10.

Comme indiqué en traits mixtes sur la figure 9, l'ensemble peut être monté, si nécessaire, à l'extrémité d'un prolongateur (50).

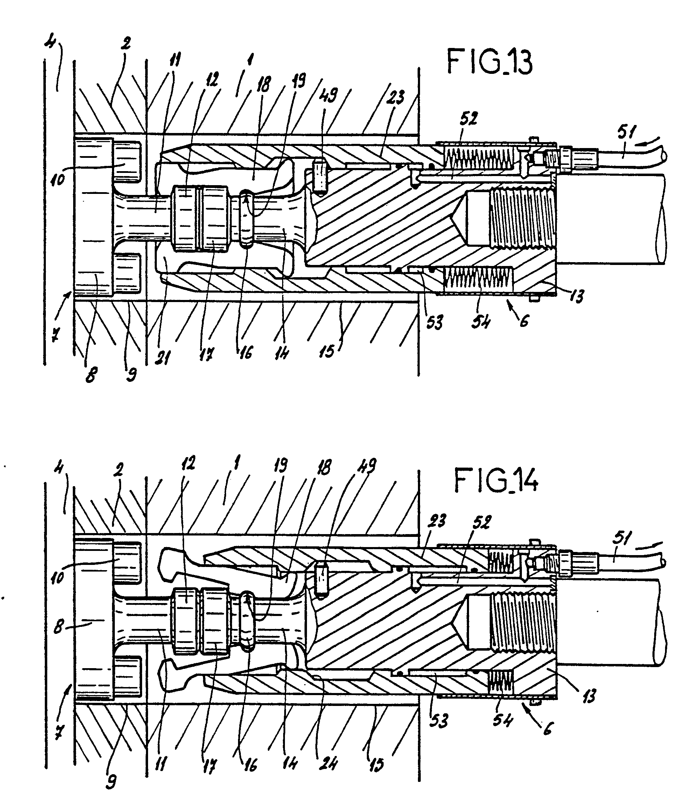

Enfin, aux figures 13 et 14, est représentée une dernière forme de réalisation qui correspond à la précédente pour la conformation générale de l'embout (13), des mâchoires (18) et du fourreau coulissant (23), mais qui possède une commande à distance hydraulique du mouvement du fourreau (23), alors que celui-ci est déplacé manuellement dans tous les cas précédents.

A cet effet, une arrivée de fluide hydraulique (51) est prévue à l'arrière de l'embout (13). Un conduit interne (52) fait communiquer l'arrivée de fluide hydraulique (51) avec une chambre annulaire (53) ménagée entre l'embout (13) et le fourreau (23). Des rondelles-ressorts (54) sont empilées et comprimées entre une face annulaire de l'embout (13) et une autre face annulaire appartenant au fourreau (23).

L'empilage de rondelles-ressorts (54) tend à pousser le fourreau (23) vers l'avant, jusqu'à une position déterminée par le doigt de butée (49), provoquant ainsi le resserrement des mâchoires (18), en réduisant aussi le volume de la chambre annulaire (53), ce qui refoule le fluide hydraulique vers l'extérieur - voir figure 13. Lorsque du fluide hydraulique sous pression est envoyé par l'arrivée (51), celui-ci est admis dans la chambre (53) et le fourreau (23) est repoussé vers l'arrière, ce qui dégage et libère les mâchoires (18) - voir figure 14. Les rondelles-ressorts (54) se trouvent alors comprimées. La commande à distance de l'action de déverrouillage est réalisable au moyen d'un bouton depuis le tableau de commande général de la presse à injecter. Cette commande peut être aussi entièrement automatique, et intégrée à un automatisme de changement de moule.

**Revendications**

1. Attelage d'éjection pour presse à injecter, comprenant un système d'accouplement entre un ensemble d'éjection (3, 4, 5) appartenant à un moule (2), d'une part, et des moyens de commande existants de la presse, d'autre part, avec d'un côté une pince à mâchoires pivotantes (18) entourées d'un fourreau (23) et de l'autre côté une tête élargie (12) apte à être maintenue par les mâchoires (18) de la pince lorsque celles-ci sont resserrées, caractérisé en ce que la tête élargie (12) est située à l'extrémité d'une queue d'éjection (7) fixée sur l'ensemble d'éjection (3, 4, 5) appartenant au moule (2), en ce que les mâchoires mobiles (18) sont montées basculantes autour d'un support commun (14) solidaire d'un embout (13) adaptable sur les moyens de commande existants de la presse, en ce que le fourreau (23) entourant les mâchoires (18) est monté coulissant de telle sorte qu'en position avancée, ce fourreau coulissant (23) maintient les mâchoires (18) resserrées de manière à retenir la tête (12) terminant la queue d'éjection (7), et qu'en position reculée, ce fourreau coulissant (23) maintient les mâchoires (18) écartées de manière à libérer la tête (12) terminant la queue d'éjection (7), et en ce que des moyens de verrouillage (29, 30; 38, 40; 41 à 44; 54) sont prévus pour bloquer temporairement le fourreau (23) en position avancée.

2. Attelage d'éjection selon la revendication 1, caractérisé en ce que les mâchoires (18) de la pince sont montées basculantes autour d'une tige (14) prolongeant un embout de vérin (13), tige qui présente une collerette (16) proche de l'embout (13) et qui se termine par une tête élargie (17), tandis que la face intérieure de chaque mâchoire (18) présente une gorge (19) dans laquelle est engagée une partie de la collerette (16), ainsi que, près de son extrémité avant, un cran (21) apte à retenir la tête (12) de la queue d'éjection (7) et la tête (17) liée à l'embout (13), lorsque les mâchoires sont resserrées.

3. Attelage d'éjection selon la revendication 1 ou 2, caractérisé en ce que chaque mâchoire (18) de la pince présente, sur sa face extérieure, une rampe inclinée (20) ainsi qu'une butée (22) située près de son extrémité avant, prévues l'une et l'autre pour coopérer avec le fourreau coulissant (23).

4. Attelage d'éjection selon la revendication 3, caractérisé en ce que le fourreau coulissant (23) présente lui-même, intérieurement, une rampe inclinée (24) prévue pour coopérer avec les mâchoires (18) de la pince.

5. Attelage d'éjection selon l'une quelconque des revendications 2 à 4, caractérisé en ce que les moyens de verrouillage sont constitués par une butée (30) montée de manière amovible sur l'embout de verin (13), cette butée (30) coopérant avec l'extrémité arrière (25) du fourreau coulissant (23) lorsqu'elle est mise en place.

6. Attelage d'éjection selon la revendication 5, caractérisé en ce que l'embout de vérin (13) porte une seconde butée (27), apte à arrêter le fourreau coulissant (23) dans sa position reculée.

7. Attelage d'éjection selon l'une quelconque des revendications 2 à 4, caractérisé en ce que les moyens de verrouillage comprennent une butée (38) portée par l'embout de vérin (13) et apte à être introduite soit dans une gorge en arc de cercle (40) ménagée à l'extrémité arrière (25) du fourreau coulissant (23), soit dans une fente longitudinale (39) de ce fourreau (23) partant de son extrémité arrière (25) et s'étendant sur une fraction de sa longueur.

8. Attelage d'éjection selon l'une quelconque des revendications 2 à 4, caractérisé en ce que les moyens de verrouillage comprennent d'une part une rainure en "L" (41), avec une partie orientée longitudinalement (42) et une partie orientée transversalement (43), qui est ménagée dans l'embout de vérin (13), et d'autre part un téton (44) porté par le fourreau coulissant (23), faisant saillie à l'intérieur de ce fourreau (23) et engagé dans la rainure en "L" (41).

9. Attelage d'éjection selon la revendication 8, caractérisé en ce qu'il comprend encore des moyens (46, 47, 48) d'indexage axial et en rotation du fourreau coulissant (23).

10. Attelage d'éjection selon la revendication 9, caractérisé en ce que les moyens d'indexage comprennent au moins un poussoir à ressort (46) porté par l'embout de vérin (I3), coopérant avec au moins une rainure en "Y" longitudinale (47), et au moins une rainure en "Y" annulaire (48), ménagées sur la paroi interne du fourreau coulissant (23).

11. Attelage d'éjection selon l'une quelconque des revendications 2 à 4, caractérisé en ce que sont prévus, pour sa commande à distance hydraulique, une chambre annulaire (53) ménagée entre l'embout de vérin (13) et le fourreau coulissant (23), ainsi que des moyens (51, 52) d'amenée de fluide hydraulique à la chambre annulaire (53), pour provoquer le recul du fourreau coulissant (23), ce dernier étant rappelé vers sa position avancée de verrouillage par des moyens à ressort (54).

12. Attelage d'éjection selon l'une quelconque des revendications 1 à 10, caractérisé en ce qu'il est complété, pour son adaptation à une presse utilisée avec un faux plateau (31), par une rallonge (32) comportant un embout (33) s'adaptant sur la tête (12) de la queue d'éjection (7), et une tige (34) se terminant par une tête (35) analogue à la précédente et apte à être retenue dans la pince formée par les mâchoires mobiles (18).

13. Attelage d'éjection selon la revendication 12, caractérisé en ce que l'embout (33) de la rallonge (32) possède un logement (36) s'ouvrant vers l'avant et sur le côté, pour recevoir la tête (12) de la queue d'éjection (7), et est muni d'une vis-butée (37) empêchant tout déplacement axial de ladite tête (12).

**Patentansprüche**

1. Lösbare Ausstoßkupplung einer Spritzgußmaschine mit einem Kupplungssystem zwischen einer Ausstoßeinrichtung (3, 4, 5) einer Gußform (2) einerseits und einer Maschinensteuerung andererseits sowie mit einer von einer Hülse (23) umgebenen Klemme mit schwenkbaren Klemmbacken (18) einerseits und mit einem vergroßerten Kopf (12) andererseits, der von den Klemmbacken (18) der Klemme gehalten wird, wenn die Klemmbacken an ihm anliegen,
dadurch gekennzeichnet,
daß der Kopf (12) sich am Ende eines Aufwerfer-Endstücks (7) befindet, das an der Ausstoßeinrichtung der Gußform (2) befestigt ist, daß die beweglichen Klemmbacken (18) um eine gemeinsame Halterung (14) hin- und her beweglich montiert sind, die an einem Übergangsstück (13) befestigt ist, das an die Steuerung angepaßt werden kann, daß die die Klemmbacken (18) umgebende Hülse (23) gleitend derart befestigt ist, daß sie in ihrer vorderen Lage die Klemmbacken in der Klemmlage für den Kopf (12) hält und in ihrer rückwärtigen Lage die Klemmbacken (18) in der Freigabelage für den Kopf (12) hält und daß Verriegelungsmittel (29, 30; 38, 40; 41 - 44; 54) vorgesehen sind, die die Hülse (23) in der vorderen Lage zeitweise festlegen.

2. Ausstoßkupplung nach Anspruch 1,
dadurch gekennzeichnet,
daß die Klemmbacken (18) um eine Stange (14) beweglich sind, die ein Zylinderteil (13) verlängert, wobei die Stange (14) dem Zylinderteil (13) benachbart einen Bund (16) hat und in einem vergrößerten Kopf (17) endet, wobei ferner die Innenfläche jeder Klemmbacke (18) eine Rille (19) aufweist, in die ein Teil des Bundes (16) eingreift, sowie in der Klemmlage der Klemmbacken (18) am vorderen Ende eine Aufnahme (21) für den Kopf (12) des Endstücks (7) und für den mit dem Zylinderteil (13) verbundenen Kopf (17).

3. Ausstoßkupplung nach Anspruch 1 oder 2,
dadurch gekennzeichnet,
daß jede Klemmbacke (18) an ihrer Außenfläche eine geneigte Auflauffläche (20) und nahe dem vorderen Ende einen Anschlag (22) hat, die mit einer Gleithülse (23) zusammenarbeiten.

4. Ausstoßkupplung nach Anspruch 3,
dadurch gekennzeichnet,
daß die Gleithülse (23) an ihrer Innenseite eine geneigte Auflauffläche (24) aufweist, die mit den Klemmbacken (18) zusammenarbeitet.

5. Ausstoßkupplung nach einem der Ansprüche 2 bis 4,

dadurch gekennzeichnet,
daß das Verriegelungsmittel einen dauerhaft am Zylinderteil (13) befestigten Anschlag (30) aufweist, der in der Betriebslage mit einem rückwärtigen Vorsprung (25) der Hülse (23) zusammenwirkt.

6. Ausstoßkupplung nach Anspruch 5,
dadurch gekennzeichnet,
daß das Zylinderteil (13) einen zweiten Anschlag (27) trägt, der die Hülse (23) in ihrer rückwärtigen Lage anhält.

7. Ausstoßkupplung nach einem der Ansprüche 2 bis 4,
dadurch gekennzeichnet,
daß das Verriegelungsmittel einen Anschlag (38) am Zylinderteil (I3) aufweist, der in eine kreisförmige Rille (40) am rückwärtigen Ende (25) der Hülse (23) eingreift oder in einen Längsschlitz (39) der Hülse (23), der von ihrem rückwärtigen Ende (25) ausgeht und sich über einen Teil ihrer Länge erstreckt.

8. Ausstoßkupplung nach einem der Ansprüche 2 bis 4,
dadurch gekennzeichnet,
daß das Verriegelungsmittel einen L-förmigen Schlitz (41) im Zylinderteil (13) aufweist, dessen einer Schenkel (42) sich in dessen Längsrichtung erstreckt und dessen anderer Schenkel (43) quer dazu, sowie eine an der Hülse (23) befestigte und nach innen vorstehende Spitze (44), die in den Schlitz (41) eingreift.

9. Ausstoßkupplung nach Anspruch 8,
dadurch gekennzeichnet,
daß Markierungen (46, 47, 48) für die Axiallage und die Drehlage der Hülse (23) vorgesehen sind.

10. Ausstoßkupplung nach Anspruch 9,
dadurch gekennzeichnet,
daß wenigstens ein federbelasteter Stift (46) am Zylinderteil (13) vorgesehen ist, der mit wenigstens einer V-förmigen Längsrille (47) und mit wenigstens einer V-förmigen Kreisrille (48) zusammenarbeitet, die in der Innenwand der Hülse (23) vorgesehen sind.

11. Ausstoßkupplung nach einem der Ansprüche 2 bis 4,
dadurch gekennzeichnet,
daß für eine hydraulische Abstandssteuerung zwischen dem Zylinderteil (13) und der Hülse (23) eine Ringkammer (53) ausgebildet ist, sowie eine in die Ringkammer mündende Hydraulikleitung (51, 52), um die Hülse (23) zurückzuziehen, die über Federmittel (54) nach vorne in die Verriegelungsstellung vorgespannt wird.

12. Ausstoßkupplung nach einem der Ansprüche 1 bis 10,
dadurch gekennzeichnet,
daß zur Anpassung an eine Presse mit einer Hilfsfläche (31) eine Verlängerung (32) mit einem Übergangsstück (33) vorgesehen ist, das sich an den Kopf (12) des Auswerfer-Endstücks (7) anpaßt, wobei eine Stange (34) in einem dem Kopf (12) gleichen Kopf (35) endet, der in der von den beweglichen Klemmbacken (18) gebildeten Klemme gehalten werden kann.

13. Ausstoßkupplung nach Anspruch 12,

dadurch gekennzeichnet,
daß das Übergangsstück (33) der Verlängerung (32) zur Aufnahme des Kopfes (12) des Endstücks (7) eine Aufnahme (36) aufweist, die nach vorne und zur Seite hin offen ist, sowie einen Schraubanschlag (37), der jedwede Axialverschiebung des Kopfes (12) verhindert.

**Claims**

1. An ejection coupling for an injection press, including a system for coupling between an ejection assembly (3, 4, 5) belonging to a mould (2), on the one hand, and existing control means for the press, on the other hand, with a claw at one side having pivoting jaws (18) surrounded by a sleeve (23) and at the other side an enlarged head (12) adapted to be held by the jaws (18) of the claw when these are tightened, characterised in that the enlarged head (12) is located at the end of an ejection lug (7) fixed on the ejection assembly (3, 4, 5) belonging to the mould (2), in that the movable jaws (18) are mounted so as to rock about a common support (14) rigid with an adaptable end portion (13) on the existing control means of the press, in that the sleeve (23) surrounding the jaws (18) is slidably mounted such that in an advanced position, the slidable sleeve (23) holds the jaws (18) tightened in such a way as to retain the end head (12) of the ejection lug (7), and in that in a released position, the slidable sleeve (23) holds the jaws (18) spread apart so as to free the end head (12) of the ejection lug (7), and in that locking means (29, 30; 38, 40; 41 to 44; 54) are provided to lock the sleeve (23) temporarily in the advanced position.

2. An ejection coupling according to Claim 1, characterised in that the jaws (18) of the claw are mounted so as to rock about a rod (14) extending from an end portion of a jack (13), which rod has a collar (16) close to the end portion (13) and ends in an enlarged head (17), whilst the internal face of each jaw (18) has a groove (19) in which is engaged a portion of the collar (16), as well as, adjacent its forward end, a tooth (21) adapted to retaing the head (12) of the ejection lug (7) and the head (17) connected to the end portion (13), when the jaws are tightened.

3. An ejection coupling according to Claim 1 or 2, characterised in that each jaw (18) of the claw has, on its external face, an inclined ramp (20) as well as an abutment (22) located close to its forward end, each provided to cooperate with the slidable sleeve (23).

4. An ejection coupling according to Claim 3, characterised in that the slidable sleeve (23) itself has internally an inclined ramp (24) provided to cooperate with the jaws (18) of the claw.

5. An ejection coupling according to any one of Claims 2 - 4, characterised in that the locking means are constituted by an abutment (30) mounted in a detachable manner on the jack end portion (13), this abutment (30), when placed in position, co-operating with the rear end (25) of the slidable sleeve (23).

6. An ejection coupling according to Claim 5, characterised in that the jack end portion (13) carries a second abutment (28), adapted to stop the slidable sleeve (23) in its retracted position.

.7. An ejection coupling according to any one of Claims 2 to 4, characterised in that the locking means include an abutment (38) carried by the jack end portion (13) and adapted to be introduced either into the arcuate groove (40) formed in the rear end (25) of the slidable sleeve (23), or into a longitudinal slot (39) in the sleeve (23) extending from its rear end (25) over a fraction of its length.

8. An ejection coupling according to any one of Claims 2 to 4, characterised in that the locking means include on the one hand an "L"-shaped groove (41), with a longitudinally oriented part (42) and a transversely oriented part (43), which is formed in the jack end portion (13), and on the other hand a projection (44) carried by the slidable sleeve (23), projecting internally of the sleeve (23) and engaged in the "L"-shaped groove (41).

9. An ejection coupling according to Claim 8, characterised in that it further includes means (46, 47, 48) for indexing the slidable sleeve (23) axially and rotationally.

10. An ejection coupling according to Claim 9, characterised in that the indexing means include at least one spring-urged detent (46) carried by the jack end portion (13), co-operating with at least one longitudinal "V"-shaped groove (47) and at least one annular "V"-shaped groove (48), formed in the internal wall of the slidable sleeve (23).

11. An ejection coupling according to any one of Claims 2 to 4, characterised in that, for the hydraulic remote control thereof it is provided with an annular chamber (53) formed between the jack end portion (13) and the slidable sleeve (23), and also means (51, 52) for bringing hydraulic fluid to the annular chamber (53), to cause the retraction of the slidable sleeve (23), this latter being returned to its advanced locking position by spring means (54).

12. An ejection coupling according to any one of Claims 1 to 10, characterised in that in order to adapt it to a press used with a dummy plate (31), it is completed by an extension (32) having an end portion (33) fitting onto the head (12) of the ejection lug (7), and a rod (34) ending in a head (35) similar to the preceding one and adapted to be retained in the claw formed by the movable jaws (18).

13. An ejection coupling according to Claim 12, characterised in that the end portion (33) of the extension (32) has a housing (36) opening forwardly and on the side to receive the head (12) of the ejection lug (7), and is provided with a screw abutment (37) preventing any axial movement of said head (12).

FIG_1

FIG_2

FIG_3

FIG_4

1

FIG.5

FIG.6

FIG.7

FIG.8

3

FIG.9

FIG.10

FIG.11

FIG.12

0 179 724

FIG.13

FIG.14

7